# EUROPÄISCHE PATENTSCHRIFT

(11) **EP 2 572 610 B1**
(45) Veröffentlichungstag und Bekanntmachung des Hinweises auf die Patenterteilung: **23.04.2014**
(21) Anmeldenummer: 12197152.7
(22) Anmeldetag: 16.12.2010
(51) Int. Cl.: A47J 31/36, A47J 31/06, A47J 31/46

(54) **Vorrichtung zur Zubereitung eines Getränkes und Kapsel dazu**
Device for preparing a drink and capsule
Dispositif de préparation d'une boisson et capsule

(30) Priorität: 18.12.2009 EP 09179979
(43) Veröffentlichungstag der Anmeldung: 27.03.2013
(62) Teilanmeldung aus: 10798056.7
(73) Patentinhaber: Delica AG, 4127 Birsfelden (CH)
(72) Erfinder: Gugerli, Raphael, 8802 Kilchberg (CH)
(74) Vertreter: Hepp Wenger Ryffel AG

(56) Entgegenhaltungen:
- EP-A1- 1 344 722
- EP-A1- 1 837 294
- EP-A1- 1 967 099
- WO-A1-2008/046740
- US-B1- 6 182 554

## Beschreibung

Die Erfindung betrifft eine Vorrichtung zum Zubereiten eines Getränks gemäss dem Oberbegriff von Anspruch 1. Derartige Vorrichtungen werden in letzter Zeit immer häufiger eingesetzt, um beispielsweise Kaffee oder Tee in stets gleich bleibender Qualität portionenweise zuzubereiten. Dabei findet in der Regel in der Aufnahmekammer ein Brühprozess statt, bei dem heisses Wasser in einer dosierten Menge durch die Portionsverpackung durchgeleitet wird. Beispiele für derartige Vorrichtungen sind in der EP 1 646 305, WO 2008/004116 oder WO 2008/087099 beschrieben.

Ein Problem bei diesen Vorrichtungen besteht darin, dass die dosierte Wassermenge nach dem Brühprozess nicht vollständig in der Form von Extrakt abfliesst. Vielmehr verbleibt eine bestimmte Menge Restwasser in der Brühkammer zurück, die spätestens beim Öffnen der Brühkammer zum Entfernen der benutzten Portionsverpackung abfliesst. Dies ist jedoch unerwünscht, weil das Restwasser das Gerät oder nächste zubereitete Getränk verunreinigt. Eine Kontamination findet insbesondere dann statt, wenn verschiedene Getränkearten mit der gleichen Maschine zubereitet werden, wie z.B. Kaffee, Tee, Milch- oder Kakao-Getränke. Bleibt Restwasser längere Zeit in der geschlossenen Kammer zurück, besteht ausserdem die Gefahr, dass ein Fermentationsprozess beginnt, der zu irreversiblen geschmacklichen Veränderungen in der Brühkammer führt. Auch nach einem Spülvorgang kann Restwasser über längere Zeit in der Brühkammer zurückbleiben.

Ein weiterer Nachteil bekannter Vorrichtungen besteht ausserdem noch darin, dass die Austrittsöffnung an der Aufnahmekammer verstopft, wobei ein Innendruck von gegen 20 bar auftreten kann. Unter einem derartigen Druck werden Dichtungen aufgepresst und Brühwasser spritzt in die Maschine oder im Extremfall sogar nach aussen durch die Eingabeöffnung, selbst bei bereits ausgeschalteter Maschine.

In der DE 20 2005 021 159 wird vorgeschlagen, ein unerwünschtes Auslaufen von allfälligem Restwasser durch ein federbelastetes Verschlussorgan zu verhindern, das sich erst beim Schliessen der Brühkammer öffnet. Dadurch wird das Problem aber nicht wirklich gelöst, weil das Restwasser bei geschlossener Kammer trotzdem ausläuft und bei geöffneter Kammer zurückgehalten wird, sodass es beim nächsten Schliessprozess ausläuft.

Durch die WO 2009/115474 ist eine gattungsmässig vergleichbare Vorrichtung bekannt geworden, bei der der Rand der gegeneinander pressbaren Kammerteile an wenigstens einem Kammerteil Lücken aufweist. Diese Lücken sind innerhalb eines begrenzten Sektors angeordnet, so dass Wasser gezielt ausfliesst, wenn sich keine Kapsel in der Kammer befindet. Eine Abdichtung dieser Lücken ist nur mit Kapseln möglich, die ein verformbares Dichtmaterial an ihrem flanschartigen Rand aufweisen. Ein dichtendes Verschliessen der Kammer ohne Kapsel ist nicht möglich. Aber auch ein Abführen überschüssiger Flüssigkeit bei geschlossener Kammer und eingesetzter Kapsel, beispielsweise unter Überdruck ist nicht möglich, weil die Lücken am Rand im Schliesszustand druckdicht abgeschlossen sind.

Durch die US 6,182,554 ist ein Halter zur Aufnahme einer Kapsel bekannt geworden, dessen der Kapsel zugewandte Unterseite mit Vorsprüngen versehen ist. Damit soll beim Öffnen des Deckels sichergestellt werden, dass sich dieser von der Oberseite der Kapsel ablöst.

Die WO 2008/046740 beschreibt eine Vorrichtung zur Zubereitung eines Getränks mit einer Kapsel, wobei die Kapsel auf beiden Seiten penetrierbar ist. Um das Ausstossen der Kapsel zu gewährleisten, ist an der Aufnahmekammer für die Kapsel ein federndes Element angebracht.

Die EP 1 967 099 betrifft ebenfalls eine Vorrichtung zur Zubereitung eines Getränks aus einer Kapsel, bei der am Deckel der Brühkammer ein gegen die Kapseloberfläche pressbares Element angeordnet ist, mit welchem das Volumen der Kapsel während des Brühprozesses reduziert wird.

Es ist eine Aufgabe der Erfindung, die Beaufschlagung der Kapsel in der Aufnahmekammer und deren Ablösung von den Kammerteilen weiter zu verbessern. Diese Aufgabe wird erfindungsgemäss mit einer Vorrichtung gelöst, welche die Merkmale im Anspruch 1 aufweist.

Es ist weiter vorteilhaft, eine Vorrichtung der eingangs genannten Art zu schaffen, bei welcher zurückbleibendes Restwassers aus der Brühkammer abgeführt werden kann, ohne dass das bereits zubereitete Getränk oder die Vorrichtung kontaminiert werden. Diese Aufgabe wird mit einer Vorrichtung gelöst, welche dadurch gekennzeichnet ist, dass die Aufnahmekammer wenigstens einen von der Kammerinnenseite zur Kammeraussenseite führenden Drainage-Kanal aufweist, welcher derart an einem Wandabschnitt eines der Kammerteile angeordnet ist, dass er beim Erstellen der Schliessstellung durch die Portionsverpackung und/oder durch das andere Kammerteil abdichtbar ist.

Der von der Kammerinnenseite zur Kammeraussenseite führende Drainage-Kanal bewirkt zunächst, dass das Restwasser nicht über den Auslauf abgeführt wird, der für das fertige Getränk vorgesehen ist. Trotzdem bleibt der Drainage-Kanal während des Brühprozesses verschlossen, weil er derart an einem Wandabschnitt eines Kammerteils angeordnet ist, dass er beim Erstellen der Schliessstellung durch die Portionsverpackung und/oder durch das andere Kammerteil abdichtbar ist. Diese Abdichtung beim Brühvorgang ist wichtig, denn dieser findet teilweise unter einem Druck von mehr als 10 bar statt. Sobald die Brühkammer geöffnet bzw. die Portionsverpackung entfernt wird, kann das verbleibende Restwasser über den Drainage-Kanal abfliessen. In bestimmten Fällen kann es sogar bereits genügen, wenn der Überdruck in der Brühkammer nachlässt, sodass die durch die Portionsverpackung erzeugte Dichtwirkung aufgehoben wird.

Der Drainage-Kanal entfaltet seine vorteilhafte Wirkung aber auch unmittelbar nach dem Brühvorgang, wenn die Aufnahmekammer geleert und anschliessend wieder verschlossen wurde. Der Prozess des Auswerfens beispielsweise einer Kaffeekapsel genügt nämlich nicht, um alles noch in den Leitungen befindliche Restwasser zu entfernen. Der Drainage-Kanal sorgt dafür, dass während der Ruhezeit bis zum nächsten Brühvorgang die gesamte Restflüssigkeit abfliessen kann. Der Drainage-Kanal wirkt aber auch als Sicherheitsventil bei sich aufbauendem hohen Innendruck. Der Drainage-Kanal wird nämlich freigelegt, bevor die Dichtungen an der Aufnahmekammer aufgedrückt werden können. Überschüssiges Wasser oder gar Dampf werden somit über den Drainage-Kanal abgeleitet. Damit ist gewährleistet, dass keine sensiblen Maschinenteile wie z.B. Elektronikbausteine usw. beschädigt werden können. Schliesslich bewirkt der Drainage-Kanal auch eine optimale Spülung der Brühkammer. Die zusätzliche Öffnung an der Aufnahmekammer bewirkt nämlich eine Reduktion des Gegendrucks beim Spülprozess und damit eine grössere Durchflussmenge der Spülflüssigkeit pro Zeiteinheit. Insbesondere auch nach einem Spülvorgang gewährleistet der Drainage-Kanal ein schnelles Entleeren und Trocknen der Aufnahmekammer.

Besonders vorteilhaft kann es sein, wenn der Drainage-Kanal auf der Kammerinnenseite eine Mündungsöffnung aufweist, welche durch einen Aussenwandabschnitt einer in der Kammer eingeschlossenen Portionsverpackung abdichtbar ist. Bei der Portionsverpackung kann es sich um eine Kapsel, um einen Pouch oder um eine andere Darreichungsform handeln. Selbstverständlich müssen die Aussenkonfiguration der Portionsverpackung und die Innenkonfiguration der Kammer im Bereich der Mündungsöffnung so aufeinander abgestimmt sein, dass die gewünschte Dichtwirkung erzeugbar ist.

Alternativ oder ergänzend kann der Drainage-Kanal aber auch durch einen dem anderen Kammerteil zugeordneten Schliesskörper abdichtbar sein, der in der Schliessstellung den Drainage-Kanal versperrt. Beim Schliesskörper kann es sich beispielsweise um einen Ventilkörper handeln, der beim Schliessen der Kammer direkt in den Drainage-Kanal eingreift und diesen versperrt. Es wäre aber auch denkbar, dass der Drainage-Kanal bei geöffneter Kammer durch ein federbelastetes Ventil in der Offenstellung gehalten wird, wobei der Schliesskörper am anderen Kammerteil lediglich das Ventil in die Schliessstellung verschiebt. Der Schliesskörper muss nicht zwingend unmittelbar am anderen Kammerteil angeordnet sein. Ersichtlicherweise wäre auch eine indirekte Wirkverbindung mit einem anderen Bauelement denkbar.

Bei einer Ausbildung der Portionsverpackung als Kapsel ist es vorteilhaft, wenn eines der Kammerteile als Halter mit einer Kavität zur Aufnahme der Portionsverpackung und das andere Kammerteil als Verschlussteil zum Verschliessen der Kavität ausgebildet ist und wenn der Drainage-Kanal am Halter angeordnet ist. Der Drainage-Kanal lässt sich so auf optimale Weise platzieren. Es spielt dabei grundsätzlich keine Rolle, wie sich die beiden Kammerteile bewegen. Selbstverständlich wäre es auch denkbar, dass der Drainage-Kanal am Verschlussteil angeordnet ist. Je nach Ausbildung der Portionsverpackung könnten die beiden Kammerteile auch völlig symmetrisch ausgebildet sein. Auch eine Anordnung von mehreren Drainage-Kanälen an einem oder an beiden Kammerteilen wäre denkbar.

Weitere Vorteile können erzielt werden, wenn die Kavität wenigstens eine Drainage-Rinne aufweist, welche sich bezogen auf eine Längsmittelachse vorzugsweise vom Boden der Kavität gegen deren Öffnung erstreckt. Die Drainage-Rinne erleichtert die Ableitung des Restwassers insbesondere auch vom Bodenbereich und über die gesamte Länge der Brühkammer. Die Drainage-Rinne hat weiter den vorteilhaften Effekt, dass sie das Auswerfen der Kapsel erleichtert, weil die Saugwirkung zwischen der Innenwand der Kavität und der Aussenwand der Kapsel reduziert oder aufgehoben wird. Die Drainage-Rinne kann sich linear über die Länge der Kavität erstrecken. Denkbar wäre aber auch die Form einer Spirale oder eine andere Konfiguration.

Die Kavität kann ferner auf der Seite ihrer Öffnung eine zur Längsmittelachse vorzugsweise im rechten Winkel geneigte Stützschulter zur Abstützung einer komplementären Wandpartie der Portionsverpackung aufweisen, wobei die Drainage-Rinne in die Stützschulter mündet und der Drainage-Kanal in der Stützschulter oder in einem unmittelbar daran angrenzenden Bereich beginnt. Auf diese Weise verschliesst die Portionsverpackung in der Schliessstellung nicht nur den Drainage-Kanal, sondern gleichzeitig auch noch das öffnungsseitige Ende der Drainage-Rinne. Ersichtlicherweise ist es vorteilhaft, wenn die Drainage-Rinne auf der gleichen radialen Ebene in die Stützschulter mündet, auf welcher auch die Mündungsöffnung des Drainage-Kanals liegt.

Zum Erzielen einer Strömung durch die Portionsverpackung kann wenigstens ein Kammerteil wenigstens ein Penetrationselement zum penetrieren der Portionsverpackung in der Schliessstellung aufweisen. Vorzugsweise sind beide Kammerteile mit wenigstens je einem Penetrationselement versehen, wobei in der Schliessstellung aber noch nicht zwingend beide Seiten der Portionsverpackung penetriert werden müssen. Bei bestimmten Systemen erfolgt die Penetration auf der Auslassseite auch erst durch Deformation der Portionsverpackung bzw. durch Überschreiten einer Reissspannung beim Aufbau eines Innendrucks. Es sind aber auch Portionsverpackungen bekannt, welche selbst mit Penetrationsmitteln versehen sind, welche beim Aufbau eines Drucks aktiviert werden. Auch komplexe Portionsverpackungen mit eingebauten Ventilen sind bekannt, welche durch Schliessen der Brühkammer oder durch Druckeinwirkung geöffnet werden.

Der Drainage-Kanal kann einen Querschnitt aufweisen, der kleiner ist als der Querschnitt der Eintrittsöffnung und/oder der Austrittsöffnung. Vorzugsweise beträgt der Querschnitt zwischen 0,1 mm² und 10 mm². Der relativ kleine Querschnitt des Drainage-Kanals gegenüber der Eintrittsöffnung bzw. der Austrittsöffnung hat den Vorteil, dass eine Spülung der Brühkammer möglich ist, wobei der grössere Teil des Spülwassers durch die Austrittsöffnung und nur ein kleinerer Teil durch den Drainage-Kanal fliesst.

Um zu verhindern, dass die über den Drainage-Kanal abgeführte Flüssigkeit die Vorrichtung verunreinigt, ist es vorteilhaft, wenn der Drainage-Kanal zu einem Gefäss zur Aufnahme der abgeführten Flüssigkeit führt. Dabei kann es sich beispielsweise um die Tropfschale handeln, die ohnehin unter dem Auslass für das Getränk angeordnet ist. Der Drainage-Kanal könnte zu diesem Zweck an eine Rohrleitung oder an eine Schlauchleitung angeschlossen sein.

Schliesslich ist es vorteilhaft, wenn die Aufnahmekammer rotationssymmetrisch ausgebildet ist und wenn der Drainage-Kanal als radiale Bohrung in eine der Kammerteile ausgebildet ist. Bei den heute üblichen Kapselsystemen verläuft die Längsmittelachse der Brühkammer in der Regel immer etwa horizontal, weil die Kapseln unter Schwerkrafteinwirkung ihre Zwischenstellung erreichen, bevor sie in der Brühkammer eingeschlossen werden. Eine radiale Bohrung als Drainage-Kanal ist die kürzest mögliche Verbindung zwischen Innenseite und Aussenseite der Kammer. Die radiale Bohrung kann dabei am tiefsten Punkt der Brühkammer angeordnet sein, sodass das Restwasser nach unten abfliesst. Selbstverständlich muss der Drainage-Kanal nicht radial zur Längsmittelachse der Kammer verlaufen. Je nach Bauweise der Vorrichtung könnte er sich über bestimmte Abschnitte auch annähernd parallel zu dieser erstrecken. Auch muss der Querschnitt des Drainage-Kanals nicht zwingend kreisförmig sein. Wichtig ist in jedem Fall, dass der Drainage-Kanal so angelegt ist, dass Flüssigkeit unter Schwerkrafteinwirkung nach unten abfliessen kann. In bestimmten Fällen könnte sich der Drainage-Kanal zwischen der Kammerinnenseite und der Kammeraussenseite aber auch auf eine höher gelegene Ebene erstrecken. Dies könnte beispielsweise dann der Fall sein, wenn ein dampfförmiges Medium wie z.B. Wasserdampf aus der Kammer abgeführt werden soll.

Die Abführung von Flüssigkeit über den Drainagekanal kann weiter dadurch verbessert werden, wenn im Bereich der Austrittsöffnung des Drainagekanals auf der Kammeraussenseite eine Abtropfschürze derart angeordnet ist, dass austretende Flüssigkeit entlang der Abtropfschürze abführbar ist. Die Abtropfschürze verläuft vorzugsweise in einer vertikalen Ebene und sie kann weiter mit einer zur Austrittsöffnung führenden Rinne versehen sein, um das Abtropfen von Flüssigkeit zu begünstigen. Die Abtropfschürze bildet auch einen Schutz für das gegenüberliegende Kammerteil, weil sie verhindert, dass Flüssigkeit in die Dichtzone zwischen den beiden Kammerteilen gerät und diese kontaminiert.

Weitere Vorteile ergeben sich durch eine Kapsel, die besonders vorteilhaft in der vorstehend beschriebenen Vorrichtung eingesetzt werden kann und die folgende Merkmale aufweist: "Kapsel, bestehend aus einem vorzugsweise rotationssymmetrischen Kapselkörper mit einer Seitenwand und mit einem einstückig mit dieser ausgebildeten Boden, sowie mit einem den Kapselkörper abdeckenden Deckel zur Bildung einer geschlossenen Kapselkammer, welche eine Substanz für die Zubereitung eines Getränks enthält, wobei der Deckel und der Boden für die Durchleitung einer Flüssigkeit mit ausserhalb der Kapsel angeordneten Mitteln, vorzugsweise in einer oben beschriebenen Vorrichtung penetrierbar sind, dadurch gekennzeichnet, dass die Seitenwand in einem dem Deckel zugewandten Bereich im Querschnitt eine umlaufende Schulter bildet, die wenigstens einen bezogen auf die Längsmittelachse der Kapsel im Querschnitt geneigten oder gekrümmten Wandabschnitt aufweist, wobei die Aussenseite der Schulter eine umlaufende Dichtfläche bildet, welche dichtend gegen eine komplementäre Auflagefläche pressbar ist".

Die umlaufende Schulter mit dem im Querschnitt geneigten oder gekrümmten Wandabschnitt ermöglicht eine vorteilhafte Abstützung der Kapsel in der Brühkammer, wobei die Aussenseite der Schulter eine Dichtfläche bildet, welche dichtend gegen eine komplementäre Auflagefläche pressbar ist. Um eine optimale Dichtwirkung erzielen zu können, sollte der Wandabschnitt vorteilhaft eine Breite von wenigstens 1 mm aufweisen. Die Höhe der Schulter beträgt vorzugsweise wenigstens 3,5 mm, um eine genügend grosse Dichtfläche zu erhalten. Unter dem Begriff Breite ist dabei das Projektionsmass zu verstehen, also die Breite gemessen im rechten Winkel zur Längsmittelachse der Kammer. Die relativ ausgeprägte umlaufende Schulter an der Kapsel hat aber auch noch weitere Vorteile. Einerseits kann sie wie aus der WO 2008/087099 an sich bereits bekannt, einen Stapelrand bilden, der es ermöglicht, die noch leeren Kapselkörper aufeinander zu stapeln, sodass sie in der Abfüllanlage besser vereinzelt werden können. Die Schulter bewirkt aber zusätzlich auch noch eine Änderung der Strömungsrichtung des unter Druck in die Kapsel eingepressten Brühwassers. Dieses neigt nämlich dazu, sich unmittelbar entlang der Kapselwand einen Kanal zu suchen, um auf dem kürzesten Weg zur Austrittsöffnung zu gelangen. Dieser Prozess wird auch als "Channeling" bezeichnet, der ersichtlicherweise dazu führt, dass die Extraktion nur unvollständig abläuft. Die umlaufende Schulter bewirkt dagegen, dass die Strömung konzentrisch gegen das innere der Kapsel gelenkt wird, sodass sich keine störenden Durchflusskanäle an der Innenwand der Kapsel bilden können.

Weiter ist es vorteilhaft, wenn der geneigte Wandabschnitt der Kapsel sich gegen den Boden verjüngend um 45° zur Längsmittelachse geneigt ist. Auf diese Weise erfolgt an der Schrägfläche eine optimale Aufteilung der einwirkenden Schliesskräfte. Die Seitenwand der Kapsel zwischen dem Boden und der Schulter kann ausserdem sich gegen den Boden verjüngend ausgebildet sein und zwar vorzugsweise um einen Winkel von 7° zur Längsmittelachse.

Weitere Vorteile können erreicht werden, wenn die Kapsel aus einer Folie aus Kunststoffmaterial tiefgezogen ist. Auch Folien aus einem Biopolymer wie z.B. Stärke oder aus Metall oder aus einem Laminat sind denkbar. Im Gegensatz zu Kapseln, die im Spritzgussverfahren hergestellt werden, haben tiefgezogene Kapseln eine wesentlich höhere Elastizität. Damit wird die Dichtwirkung der Kapsel an ihrer Schulter erheblich verbessert. Es ist dabei besonders vorteilhaft, den Boden der Kapsel insbesondere gegen das Innere der Kapsel elastisch deformierbare auszubilden. Dies wird vorteilhaft dadurch erreicht, dass der Radius am Übergang vom Boden zur Seitenwand dünner ausgebildet wird als der Boden selbst. Der Übergangsbereich könnte dabei eine Wandstärke von bis zu 0,18 mm aufweisen und der Boden 0,1 bis 0,2 mm. In der Aufnahmekammer vorhandene Penetrationsmittel bewirken dadurch zunächst eine Wölbung des Kapselbodens gegen Innen und allenfalls eine leichtes Anstechen des Kapselbodens.

Weitere Vorteile beim Brühprozess können erreicht werden, wenn wenigstens eines der Kammerteile gegen die Aufnahmekammer gerichtete Kompressionsmittel aufweist, mit denen in der Schliessstellung die Portionsverpackung beaufschlagbar sind. Diese Kompressionsmittel werden vorzugsweise in Kombination mit den vorstehend erwähnten Penetrationsmitteln eingesetzt und zwar bevorzugt derart, dass sie den Randbereich des Kapseldeckels beaufschlagen. Dadurch wird der Deckel der Kapsel straff aufgespannt, sodass die Penetrationsmittel besser eindringen können und einströmendes Wasser über die gesamte Deckelfläche verteilt wird. Die Kompressionsmittel können dabei bolzenartig zylindrisch oder auch quaderförmig ausgebildet sein. Die Stirnseiten diese Kompressionsmittel können gerundet oder eckig ausgebildet sein. In bestimmten Fällen wäre auch eine Kombination von Kompressionsmitteln und Penetrationsmitteln denkbar.

Die Kompressionsmittel umfassen erfindungsgemäss wenigstens ein Federelement, das eine Mehrzahl von Blattfedern aufweist, die sich von einem Zentrum ausgehend radial nach aussen erstrecken und deren federnde freie Enden in der Schliessstellung die Portionsverpackung beaufschlagen. Dabei ergibt sich eine spinnenbeinartige Anordnung der einzelnen Blattfedern. Zwischen einzelnen oder allen Blattfedern können Penetrationselemente und/oder weitere Kompressionsmittel, beispielsweise in der Form von Bolzen am Kammerteil angeordnet sein. Die Enden der Blattfedern spannen nicht nur die Deckelfolie einer Kapsel, sondern sie verhindern auch, dass die Kapsel beim Öffnen der Kammer auf den Penetrationsmitteln stecken bleibt. Die Kraft der Blattfedern ist derart dimensioniert, dass eine penetrierte Kapsel bei geöffneter Kammer abgestossen wird. Eine derartige Anordnung wäre ersichtlicherweise auch bei konventionellen Vorrichtungen ohne Drainagekanal äussert vorteilhaft und zweckmässig.

An einer erfindungsgemässen Vorrichtung ist weiter zweckmässig, wenn die Seitenwand der verwendeten Kapsel unter der Einwirkung von Druck radial ausdehnbar ist, wobei der Drainagekanal durch die Dichtfläche der ausgedehnten Seitenwand abdichtbar ist. Die Aufnahmekammer kann dabei so dimensioniert werden, dass sich die Kapsel während einer Extraktion unter Druck um mehr als 1 mm radial ausdehnen kann. Auf diese Weise muss die Kapsel zum Erzielen der Dichtwirkung nicht sehr präzise dimensioniert werden.

Weitere Vorteile und Merkmale der Erfindung ergeben sich aus der nachfolgenden Beschreibung von Ausführungsbeispielen und aus den Zeichnungen. Es zeigen:
- Figur 1: eine perspektivische Darstellung einer Kaffeemaschine beim Laden einer Kapsel,
- Figur 2: die Kaffeemaschine gemäss Figur 1 beim Ausgeben des Getränks und mit separat dargestelltem Auffangbehälter,
- Figur 3: einen Querschnitt durch die Kaffeemaschine gemäss Figur 1 in stark vereinfachter Darstellung und mit einer erfindungsgemässen Vorrichtung,
- Figur 4: eine perspektivische Darstellung eines Kapselhalters mit Kapsel und Verschlussteil,
- Figur 5: einen Längsschnitt durch einen Kapselhalter,
- Figur 6: einen Querschnitt durch den Kapselhalter gemäss Figur 5 im Bereich des Drainage-Kanals,
- Figur 7: einen perspektivischen Längsschnitt durch die Anordnung gemäss Figur 4,
- Figur 8: die Anordnung gemäss Figur 7 kurz vor dem Verschliessen der Aufnahmekammer,
- Figur 9: einen Längsschnitt durch eine verschlossene Brühkammer während des Brühprozesses,
- Figur 10: einen Längsschnitt durch ein abgewandeltes Ausführungsbeispiel einer Aufnahmekammer,
- Figur 11: einen Querschnitt durch die Aufnahmekammer gemäss Figur 10 im Bereich des Drainage-Kanals,
- Figur 12: verschiedene Ausführungsbeispiele von Verschlussteilen mit alternativen Kompressionsmitteln,
- Figur 13: einen Längsschnitt durch ein alternatives Ausführungsbeispiel mit durch das Verschlussteil verschliessbarem Drainage-Kanal,
- Figur 14: eine perspektivische Darstellung einer Kapsel,
- Figur 15: einen Schnitt durch zwei gestapelte Kapselkörper,
- Figur 16: einen Schnitt durch eine Kapsel in vergrösserter Darstellung,
- Figur 17: eine Draufsicht auf den Kapselboden der Kapsel gemäss Figur 16,
- Figur 18: einen Schnitt durch einen Kapselkörper gemäss einem weiteren Ausführungsbeispiel,
- Figur 19: einen Schnitt durch einen Kapselkörper gemäss einem weiteren Ausführungsbeispiel,
- Figur 20: einen Schnitt durch einen Kapselkörper gemäss einem nochmals abgewandelten Ausführungsbeispiel,
- Figur 21: einen Längsschnitt durch einen Kapselhalter gemäss einer weiteren Ausführungsform,
- Figur 22: eine Draufsicht auf die Öffnung des Kapselhalters gemäss Figur 21,
- Figur 23: eine Bodensiebplatte zum Einsetzen in den Kapselhalter gemäss Figur 21 in perspektivischer Darstellung und vergrössert,
- Figur 24: eine Seitenansicht auf eine Injektorplatte mit Blattfedern, und
- Figur 25: eine Draufsicht auf die Injektorplatte gemäss Figur 24.

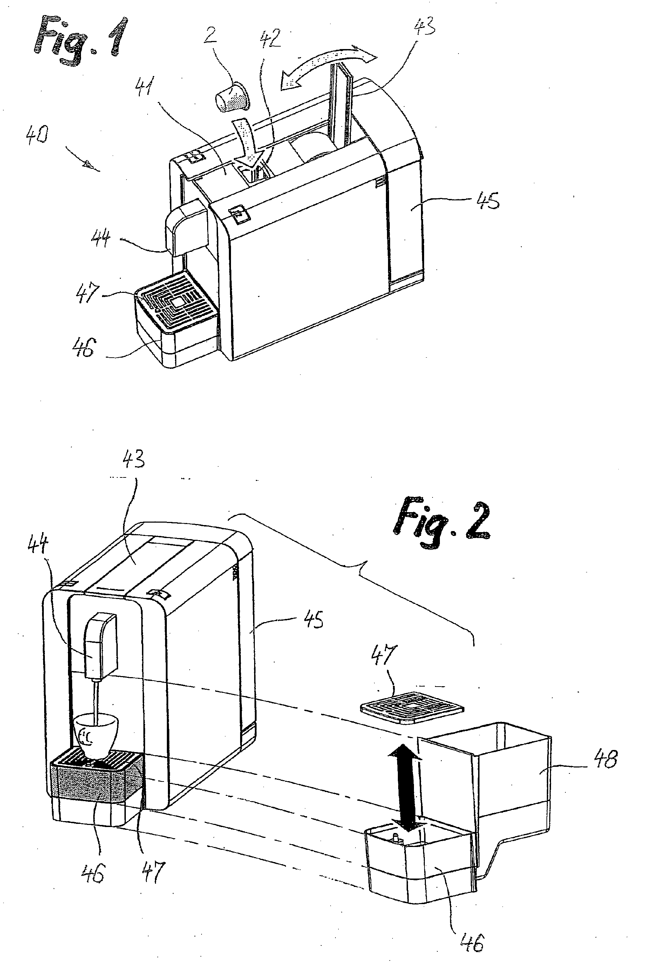

In Figur 1 ist eine mit 40 bezeichnete Kaffeemaschine dargestellt, bei der auf an sich bekannte Art und Weise eine Kaffeekapsel 2 durch eine Eingabeöffnung 42 einem Brühmodul 41 zugeführt werden kann. Mit Hilfe eines Betätigungshebels 43 wird die Kapsel auf nachstehend noch beschriebene Art und Weise in eine Brühposition gebracht, in welcher am Auslass 44 eine dosierte Menge Kaffee ausgegeben wird (Figur 2). Die Kaffeemaschine verfügt zu diesem Zweck über einen Wassertank 45. Unter dem Auslass 44 ist eine Tropfschale 46 angeordnet, welche mit einem Sieb 47 abgedeckt ist.

In Figur 2 ist auch noch der mit der Tropfschale 46 verbundene, jedoch von aussen nicht sichtbare Kapselbehälter 48 dargestellt, welcher die gebrauchten Kapseln 2, sowie allfälliges Restwasser aus der Brühkammer aufnimmt.

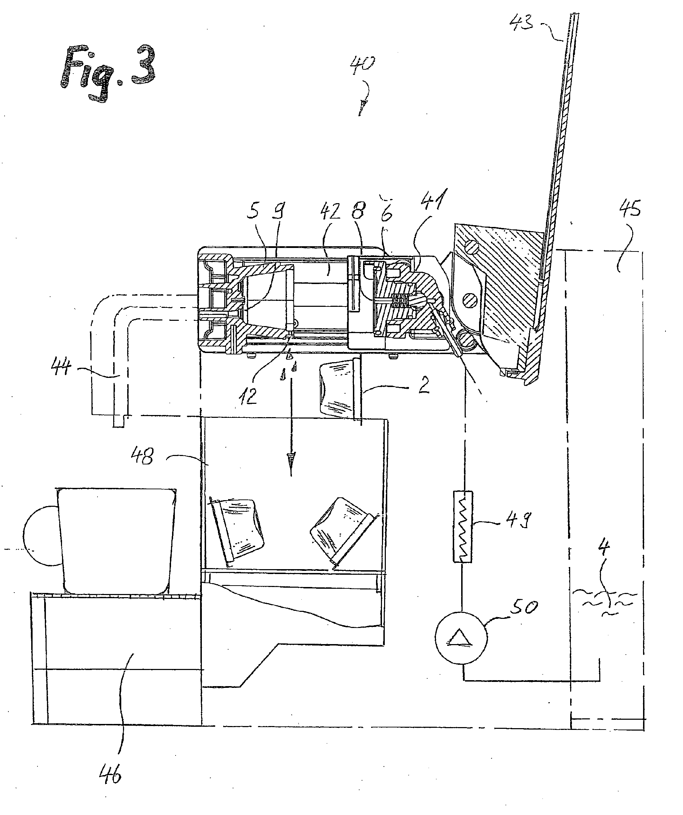

Diese Situation ist in Figur 3 dargestellt. Beim Zurückschieben des Betätigungshebels 43 nach dem Brühprozess fällt die benutzte Kapsel 2 nach unten in den Kapselbehälter 48. Das Brühmodul 41 weist beim vorliegenden Ausführungsbeispiel einen Halter 5 zur Aufnahme der Kapsel auf, welcher relativ fest angeordnet ist. Das Verschlussteil 6 zum Verschliessen der Brühkammer ist über den Betätigungshebel 43 linear gegen den Halter 5 bewegbar.

Nach dem Auswurf der Kapsel wird der Betätigungshebel 43 in der Regel wieder geschlossen, sodass die Brühkammer sich wieder in der abgedichteten Schliessposition befindet, gleich wie beim Brühvorgang. Auch in dieser Ruheposition der Kaffeemaschine kann über den Drainage-Kanal 12 Restwasser abtropfen.

Am Verschlussteil 6 ist eine Eintrittsöffnung 8 und am Halter 5 ist eine Austrittsöffnung 9 angeordnet. Letztere führt direkt zum Auslass 44. Das Brühwasser 4 im Tank 45 wird über eine Pumpe 50 und einen Durchlauferhitzer 49 der Eintrittsöffnung 8 zugeführt. Beim Schliessen des Brühmoduls durch Betätigen des Hebels 43 wird eine vorher eingeführte Kapsel mit hier nicht dargestellten Penetrationsmitteln penetriert, sodass das Brühwasser durch die Kapsel fliessen kann. Am unteren Rand des Halters 5 ist ein Drainage-Kanal 12 angeordnet, dessen Funktion nachstehend noch genauer beschrieben wird.

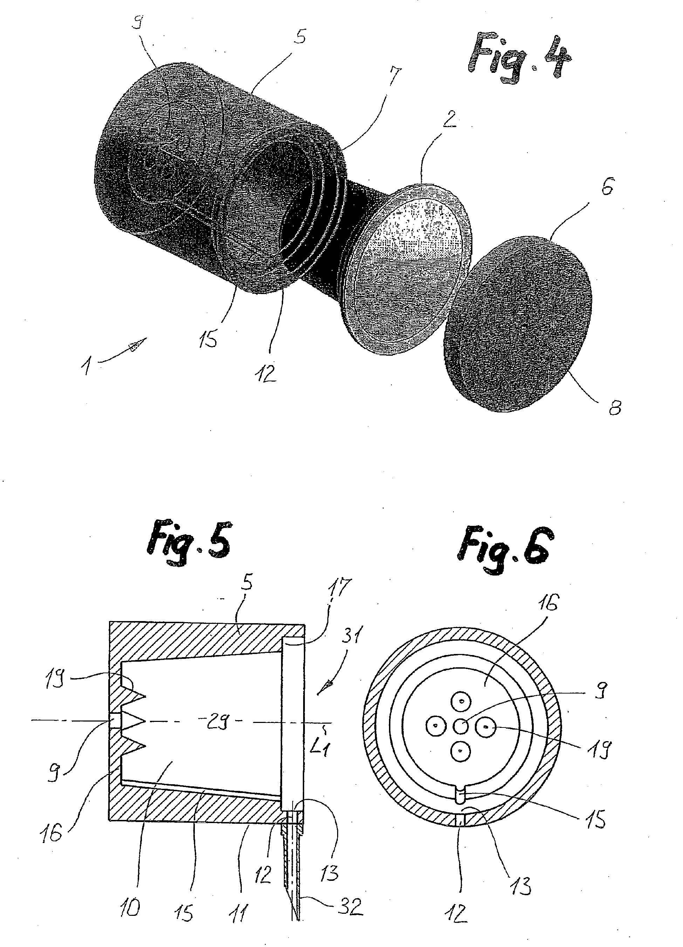

Figur 4 zeigt stark vereinfacht eine erfindungsgemässe Vorrichtung 1, die Bestandteil des in Figur 3 dargestellten Brühmoduls ist. Das Verschlussteil 6 und der Halter 5 werden gegeneinander gepresst und bilden so eine Aufnahmekammer 7 für die Kapsel 2.

Einzelheiten des Halters sind in den Figuren 5 und 6 dargestellt. Der Halter 5 weist eine Kavität 29 auf, die der Form der Kapsel angepasst ist und im vorliegenden Fall etwa kegelstumpfförmig ausgebildet ist. Am Boden 16 der Kavität ist die Austrittsöffnung 9 angeordnet. Um die Austrittsöffnung herum sind insgesamt vier Penetrationselemente 19 angeordnet, deren Anzahl und Anordnung natürlich beliebig variieren kann. Auf der Seite ihrer Öffnung 31 weist die Kavität 29 eine Stützschulter 17 auf und ebenfalls im Bereich der Öffnung ist ein Drainage-Kanal 12 angeordnet, der sich als radiale Bohrung von der Kammerinnenseite 10 zur Kammeraussenseite 11 erstreckt. Die Mündung 13 des Drainage-Kanals liegt im erweiterten Öffnungsbereich vor der Stützschulter 17. Vom Boden 16 der Kavität bis zur Stützschulter erstreckt sich eine Drainage-Rinne 15, die auf der gleichen radialen Ebene liegt wie der Drainage-Kanal 12.

Aus Figur 5 ist weiter ersichtlich, dass sich der Drainage-Kanal 12 in einer Abtropfkanüle 32 fortsetzen kann. Durch die angeschrägte Spitze dieser Kanüle wird das Abtropfen von Flüssigkeit begünstigt. In bestimmten Fällen wäre es selbstverständlich auch denkbar, dass der Drainage-Kanal in einen flexiblen Schlauch mündet.

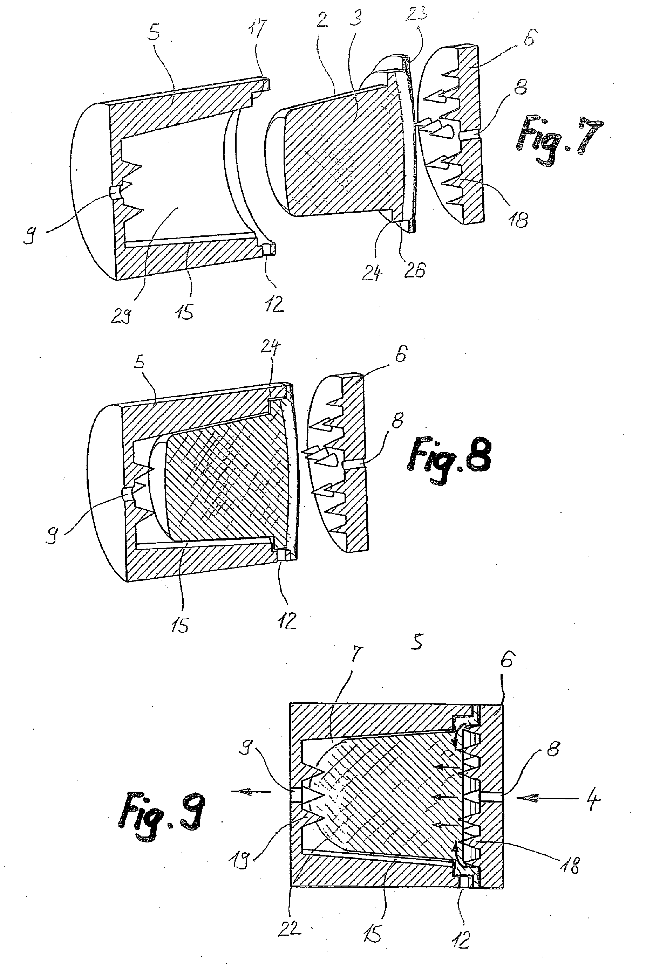

Figur 7 zeigt nochmals etwa die gleiche Situation wie Figur 4, jedoch im Querschnitt durch die radiale Ebene des Drainage-Kanals 12 und der Drainage-Rinne 15. Ausserdem sind hier auch die Penetrationselemente 18 am Verschlussteil 6 sichtbar, welche den Deckel 23 der Kapsel 2 penetrieren können. Die Kapsel 2 ist beispielsweise mit relativ kompakt gepresstem Kaffeepulver 3 gefüllt. Hier gut sichtbar ist ausserdem eine umlaufende Schulter 24 unmittelbar unter dem Kapselkragen 30, deren Aussenseite insgesamt eine Dichtfläche 26 bildet.

In Figur 8 ist eine Betriebsstellung dargestellt, bei der die Kapsel 2 bereits in die Kavität 29 des Halters 5 eingeführt ist. Das Verschlussteil 6 ist jedoch noch nicht dichtend gegen den Halter 5 gepresst. Wie dargestellt passt die umlaufende Schulter 24 etwa komplementär auf die umlaufende Schulter 17 am Halter 5. Dabei wird auch der Drainage-Kanal 12 verschlossen, jedoch noch nicht druckdicht abgedichtet. Die Drainage-Rinne 15 bildet zusammen mit der Aussenwand der Kapsel einen geschlossenen Kanal, der aber ebenfalls noch nicht druckdicht abgeschlossen ist.

Figur 9 zeigt die Situation während des Brühvorgangs, bei dem das mit dem Pfeil dargestellte Brühwasser 4 durch die Eintrittsöffnung 8 unter Druck in die verschlossene Aufnahmekammer 7 gepresst wird, wobei der Kaffeeextrakt aus der Austrittsöffnung 9 austritt. Die Penetrationselemente 18 haben beim Schliessen der Kammer 7 den Deckel 23 der Kapsel bereits penetriert und das einströmende Brühwasser presst den Deckel 23 der Kapsel gegen das Innere der Kapsel, sodass sich das Brühwasser auf der ganzen Fläche des Deckels verteilt und durch die geschaffenen Öffnungen ins Innere der Kapsel dringt. Die umlaufende Schulter 24 der Kapsel bewirkt dabei, dass einströmendes Brühwasser im Randbereich gegen das Zentrum der Kapsel hingelenkt wird, was mit den gekrümmten Pfeilen dargestellt ist. Dadurch wird verhindert, dass das Brühwasser im Randbereich sich einen Kanal zwischen der Kapselwand und dem Kaffeepressling suchen kann, was zu einer unvollständigen Extraktion führen würde.

Unter der Einwirkung des Innendrucks wölbt sich der Boden 22 der Kapsel nach aussen, sodass er durch die Penetrationselemente 19 am Boden der Kavität ebenfalls penetriert wird. Es wäre aber auch denkbar, dass der Boden und der Deckel der Kapsel beim schliessen der Kammer gleichzeitig penetriert werden.

Unter der Einwirkung des Innendrucks presst sich auch die umlaufende Dichtfläche 26 der Kapsel gegen die Mündung des Drainage-Kanals 12, sodass dieser dichtend verschlossen wird. Trotzdem ist gewährleistet, dass sich beim Aufbau eines übermässigen Innendrucks in der Kammer 7 die Flüssigkeit über die Drainage-Rinne 15 und den Drainage-Kanal 12 einen Weg auf die Aussenseite der Kammer verschaffen kann. Der Drainage-Kanal 12 erfüllt somit auch noch die Funktion eines Sicherheitsventils. Nach der Beendigung des Brühprozesses, also nach dem Druckabbau in der Kammer 7 kann überschüssige Flüssigkeit sofort wieder über den Drainage-Kanal 12 abgeführt werden, noch bevor die Brühkammer wieder geöffnet wird. Dadurch wird verhindert, dass überschüssige Flüssigkeit ausschliesslich über die Austrittsöffnung 9 abgebaut werden kann.

Es wäre selbstverständlich auch denkbar, dass während des Brühprozesses nur der Drainage-Kanal 12, nicht aber die Mündung der Drainage-Rinne 15 verschlossen wird. Unter bestimmten Voraussetzungen könnte aber auch nur die Mündung der Drainage-Rinne verschlossen werden, welche dann praktisch selber die Funktion eines Drainage-Kanals übernimmt.

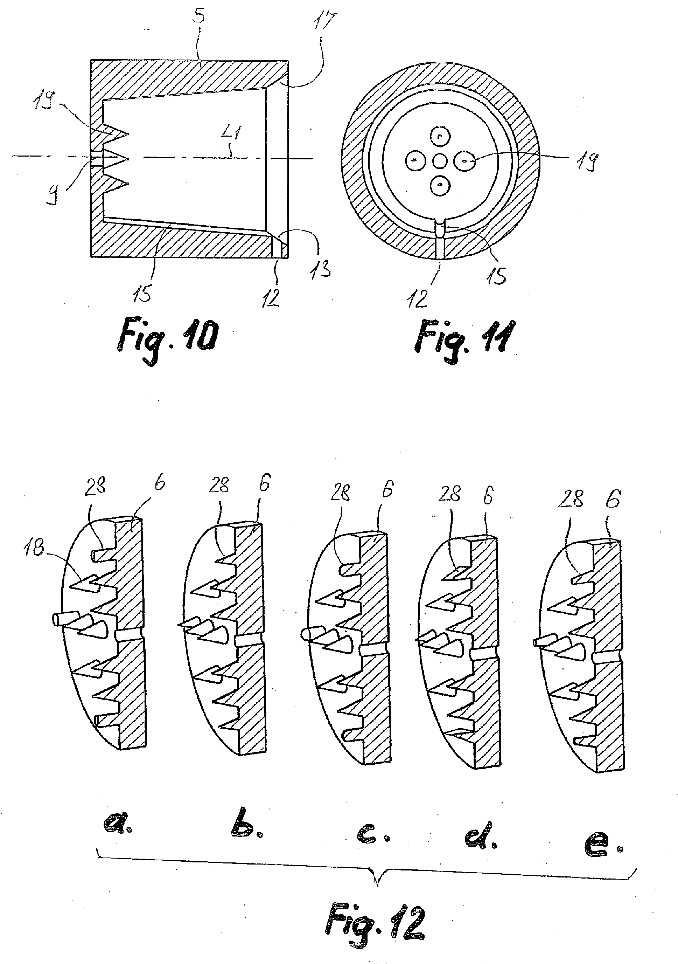

In den Figuren 10 und 11 ist eine alternative Ausführungsform eines Halters 5 dargestellt. Dieser unterscheidet sich vom Ausführungsbeispiel gemäss den Figuren 5 und 6 einzig dadurch, dass die umlaufende Schulter 17 nicht im rechten Winkel zur Längsmittelachse L1 der Kavität, sondern in einem Winkel zu dieser ausgebildet ist. Die Schulter 17 bildet dabei einen Konus, dessen Mantel sowohl die Mündung des Drainage-Kanals 12 als auch das Ende der Drainage-Rinne 15 schneidet.

Selbstverständlich sind weitere Querschnittskonfigurationen der Schulter 17 denkbar. Diese könnte auch kurvenförmig, insbesondere kreisbogenförmig verlaufen. Wichtig sind in jedem Fall bei allen Konfigurationen eine ausreichende Breite und eine ausreichende Höhe, damit rund um die Mündung 13 des Drainage-Kanals eine ausreichende Dichtfläche vorhanden bleibt.

In Figur 12 sind insgesamt fünf verschiedene Varianten von Verschlussteilen 6 dargestellt. Das Besondere an diesen Verschlussteilen besteht ausserdem noch darin, dass neben den bereits erwähnten Penetrationselementen 18 insbesondere im Aussenbereich noch zusätzliche Kompressionsmittel 28 angeordnet sind. Diese haben nicht primär die Aufgabe, den Deckel der Kapsel möglichst rasch zu penetrieren. Vielmehr sollen die Kompressionsmittel den Deckel der Kapsel im Randbereich aufspannen, wie dies in der Schliessstellung S gemäss Figur 9 dargestellt ist. Durch das Aufspannen des Kapseldeckels ist gewährleistet, dass sich das eintretende Brühwasser über die gesamte Oberfläche verteilt. Die Kompressionsmittel könnten aber auch eine Doppelfunktion haben, indem sie den Kapseldeckel wenigstens in einer letzten Phase des Schliessvorgangs auch noch ganz oder teilweise penetrieren. Die erwähnten Kompressionsmittel entfalten ihre optimale Wirkung unabhängig vom Drainage-Kanal 12, sodass sie auch bei konventionellen Vorrichtungen ohne Drainage-Kanal eingesetzt werden könnten.

Gemäss Figur 12a sind die Kompressionselemente 28 zylindrisch ausgebildet. Es sind insgesamt vier derartige Elemente in einer regelmässigen Winkelteilung von 90° über den Aussenrand des Verschlussteils 6 verteilt. Gemäss Figur 12b sind die Kompressionselemente 28 ebenfalls als Kegelspitzen ausgebildet, die sich von den übrigen Penetrationselementen nur durch ihre Höhe unterscheiden. In Figur 12c sind die Kompressionselemente als aussen kalottenartig abgerundete Zylinder dargestellt. Ersichtlicherweise vermögen diese den Deckel der Kapsel nicht zu penetrieren. Selbstverständlich kann die Anzahl und Anordnung der Kompressionselemente beliebig variieren. Es wäre denkbar, dass auch nur ein einziges Kompressionselement vorhanden ist. Dieses könnte beispielsweise auch die Form eines die Penetrationselemente einschliessenden Ringes haben.

Gemäss Figur 12d sind die Penetrationselemente 28 als Keile dargestellt. Schliesslich zeigt Figur 12e noch eine Variante, bei welcher die Kompressionselemente 28 im Querschnitt trapezförmig ausgebildet sind. Die Elemente könnten dabei sowohl als abgeflachte Keile oder kegelstumpfförmig ausgebildet sein. Selbstverständlich wären noch beliebig andere Varianten derartige Kompressionselemente denkbar, die sich je nach Ausgestaltung der Kapsel auch über verschiedene Bereiche des Verschlussteils erstrecken könnten.

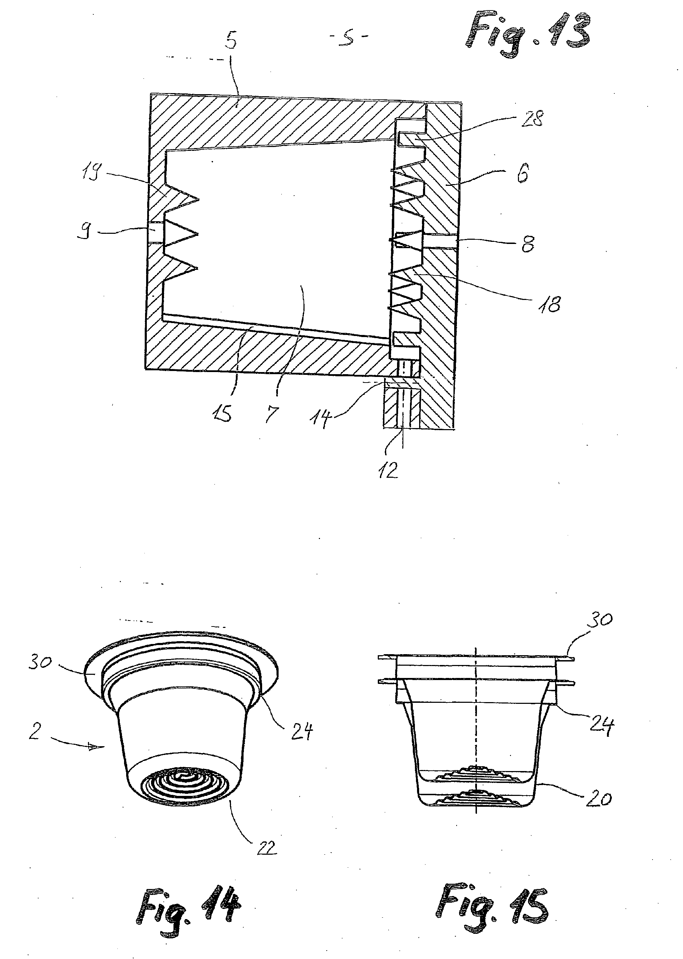

In Figur 13 ist eine alternative Variante einer Vorrichtung 1 dargestellt, bei welcher der Drainage-Kanal auch ohne eingelegte Kapsel in der Schliessstellung S abgedichtet wird. Zu diesem Zweck verfügt das Verschlussteil 6 über einen Schliesskörper 14, der beispielsweise zylindrisch oder quaderförmig ausgebildet sein kann. Im dargestellten Schliesszustand S versperrt dieser Schliesskörper den Drainage-Kanal 12 wie ein Absperrorgan an einem Ventil. Bei dieser Ausgestaltung kann die Aufnahmekammer 7 mit heissem Wasser gespült werden, ohne das Spülwasser über den Drainage-Kanal 12 austritt.

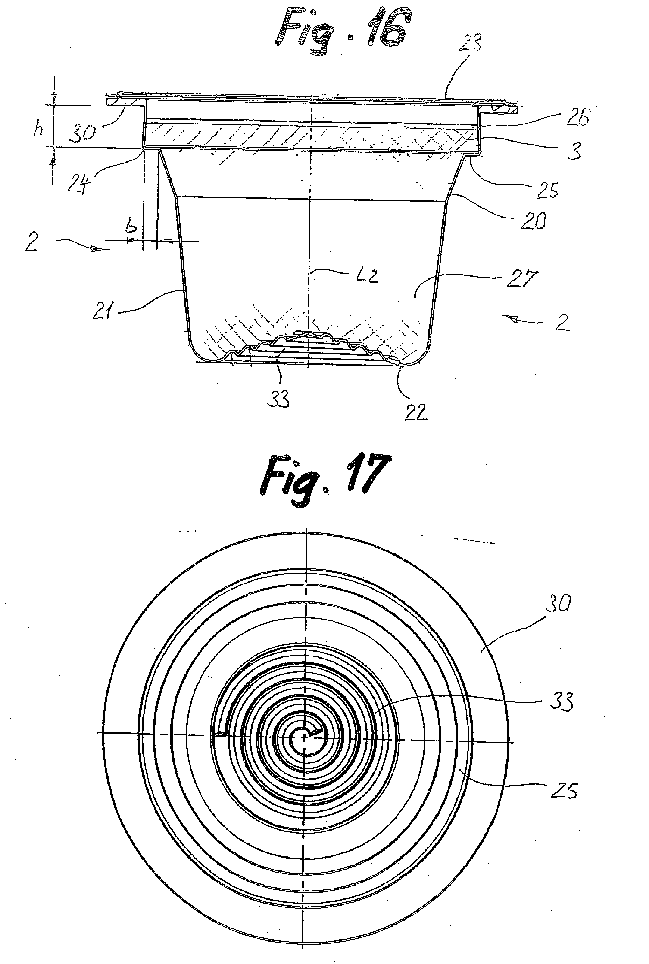

Figur 14 zeigt eine Aussenansicht einer Kapsel, welche anhand der Figuren 16 und 17 noch genauer beschrieben wird. Wie aus Figur 15 ersichtlich ist, erlaubt die umlaufende Schulter 24 auch noch eine vorteilhafte Stapelung der leeren Kapselkörper 20 vor dem Füllen und Verschliessen. Ein so genannter Stapelrand ist zwar bereits bei konventionellen Kapseln bekannt.

Wie aus den Figuren 16 und 17 ersichtlich ist, wird der eigentliche Kapselkörper 20 bestehend aus Seitenwand 21, Boden 22 und umlaufender Schulter 24 durch einen Deckel 23 verschlossen, der mit dem umlaufenden Kapselkragen 30 verschweisst oder verklebt wird. Die Substanz 3, beispielsweise Kaffee, bildet einen kompakten Kuchen in der Kapselkammer 27, dessen Oberfläche unmittelbar unter dem Deckel 23 endet. Die gesamte Aussenseite der Schulter 24 bildet eine Dichtfläche 26, welche in der Lage ist, sich dichtend gegen eine komplementäre Fläche an der Brühkammer zu legen. Der Wandabschnitt 25, der vorliegend etwa im rechten Winkel zur Längsmittelachse L2 der Kapsel verläuft, hat eine Breite b von vorzugsweise mehr als 1 mm. Dieser Wandabschnitt legt sich in der Schliessstellung S der Brühkammer dichtend gegen das Ende der Drainage-Rinne 15 (siehe Figur 9). Die Höhe der Schulter 24 bezogen auf die Längsmittelachse L2 beträgt vorzugsweise wenigstens 3,5 mm, gemessen vom Ansatz des Wandabschnitts 25 bis zum Kapselkragen 30. In Ausnahmefällen z.B. bei einem Drainage-Kanal mit sehr geringem Durchmesser, könnte dieses Mass auch unterschritten werden.

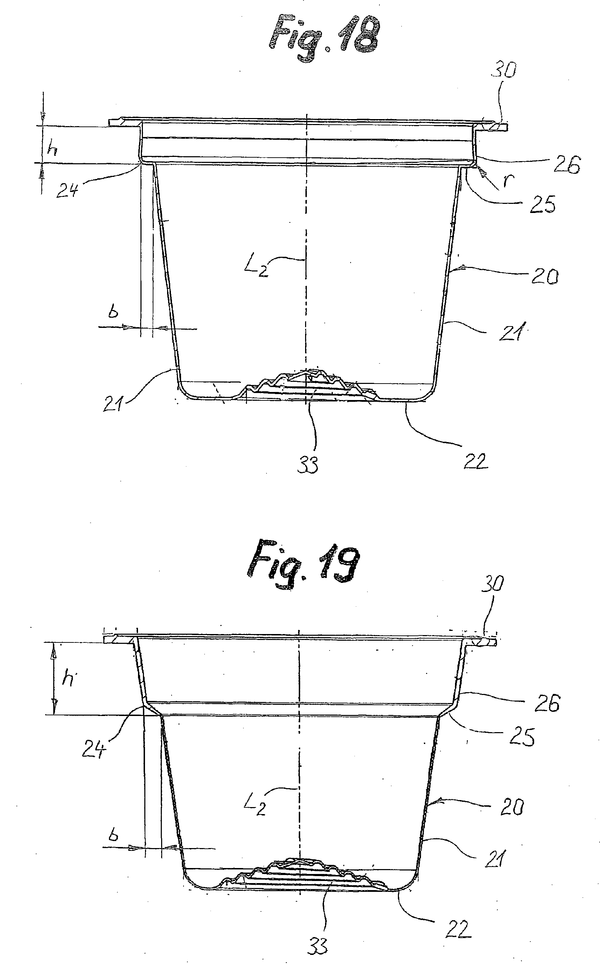

Figur 18 zeigt einen Kapselkörper 20 ohne Deckel und ohne Kapselinhalt mit einer alternativen Querschnittskonfiguration. Insbesondere die umlaufende Schuler 24 ist im Querschnitt mit einem Radius r gerundet ausgebildet. Die Breite b der Schulter in der Projektion kann dabei gleich sein wie beim Ausführungsbeispiel gemäss Figur 16. Auch die Kapselseitenwand 21 ist hier nicht zweistufig konisch ausgebildet wie beim Ausführungsbeispiel gemäss Figur 16, sondern sie verläuft direkt von der umlaufenden Schulter 24 mit dem Wandabschnitt 25 zum Boden 22. Auch dieser ist etwas anders ausgestaltet, weil die Faltenbalgspirale 33 einen kleineren Aussendurchmesser aufweist, sodass eine kreisringförmige Bodenfläche verbleibt. Die Faltenbalgspirale 33 hat die Aufgabe, den Boden 22 in diesem Bereich flexibel auszubilden, sodass sich der Faltenbalg bei Gegendruck gegen das Kapselinnere ausdehnt.

Figur 19 zeigt einen Kapselkörper 20, bei dem alle seitlichen Wandpartien, also Dichtfläche 26, Wandabschnitt 25 und restliche Seitenwand 21 sich gegen den Boden 22 hin konisch verjüngen. Die Höhe h der Schulter 24 ist im Verhältnis zur Breite b des Wandabschnitts 25 grösser als in den vorher beschriebenen Fällen. Die Höhe könnte hier z.B. 8 mm betragen.

Selbstverständlich sind insgesamt verschiedene Konfigurationen der Brühkammer und/oder der Kapsel bzw. der Portionsverpackung denkbar, ohne den Gegenstand der Erfindung zu verlassen. So könnten beispielsweise mehrere Drainage-Kanäle an verschiedenen Stellen der Kammerteile angeordnet sein. Das Gleiche gilt auch für die beschriebene Drainage-Rinne, wobei diese auch an der Kapsel angeordnet sein könnte.

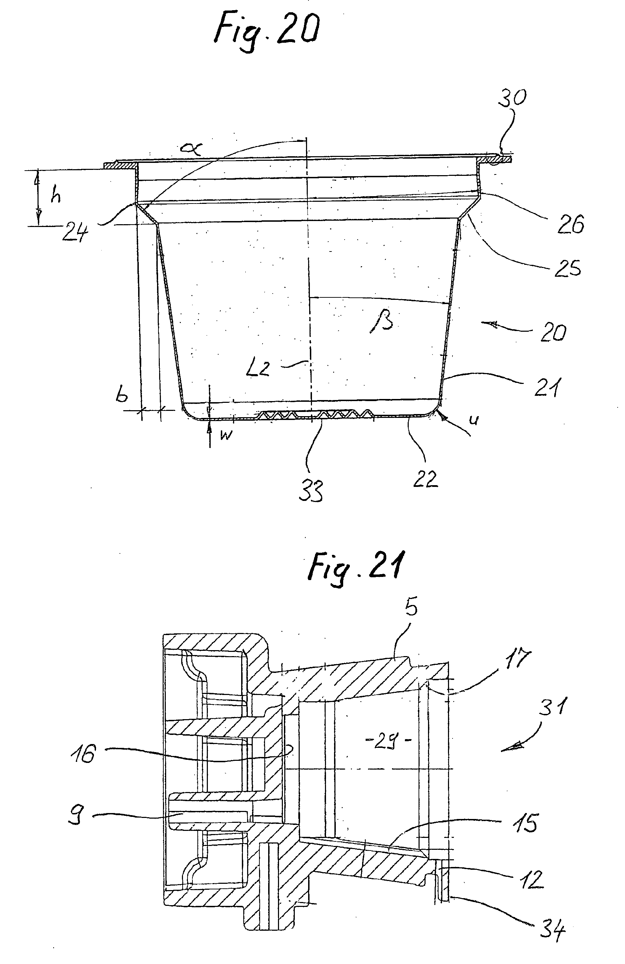

In Figur 20 ist ein weiterer Kapselkörper dargestellt, bei dem die Höhe h der Schulter 24 im Vergleich zum Ausführungsbeispiel gemäss Figur 19 geringer ausgebildet ist. Die Breite b der Schulter ist zwar ungefähr gleich, doch ist der Winkel α zur Längsmittelachse L2 etwas geringer ausgebildet, so dass sich im Bereich des Wandabschnitts 25 eine geringfügig grössere Fläche ergibt. Der Winkel α beträgt im vorliegenden Ausführungsbeispiel exakt 45°. Ein weiterer Unterschied zur Kapsel gemäss Figur 19 besteht darin, dass die spiralenförmige Deformation 33 am Boden völlig flach ausgebildet ist und sich nicht gegen das Kapselinnere wölbt. Damit kann das Füllvolumen der Kapsel geringfügig erhöht werden. Der Neigungswinkel β der Seitenwand 20 zwischen der Schulter 24 und dem Boden 22 beträgt im vorliegenden Ausführungsbeispiel exakt 7°.

Der Boden 22 der Kapsel kann eine Wandstärke w von z.B. 0,1 bis 0,2 mm aufweisen, während die Wandstärke im gerundeten Übergangsbereich u lediglich 0,1 bis 0,18 mm betragen kann. Der Übergangsbereich wirkt so wie ein Biegegelenk, was eine flexible Deformation des Bodens nach innen erleichtert.

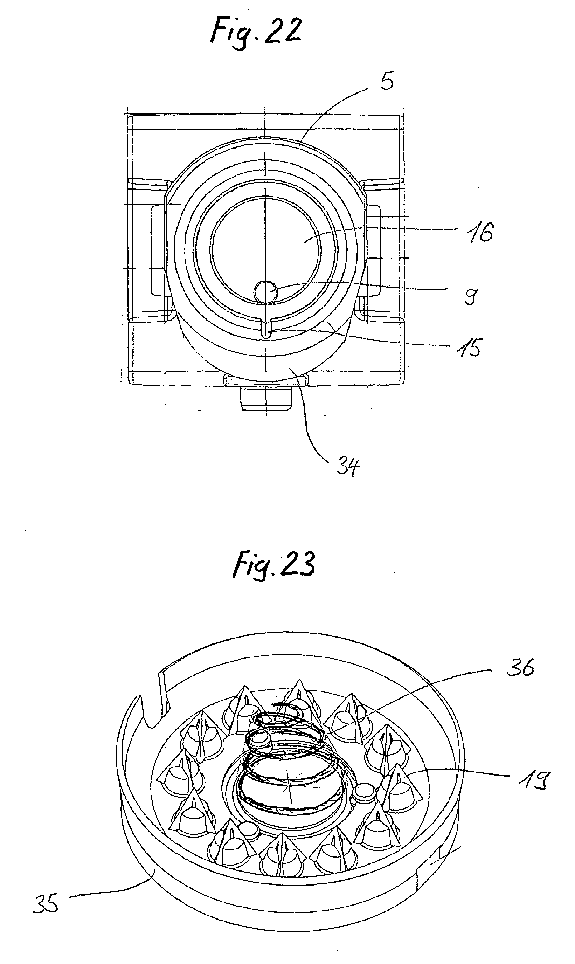

Der Kapselhalter 5 gemäss Figur 21 ist im Grundprinzip gleich aufgebaut wie derjenige gemäss Figur 5. Die Innenkonfiguration der Kavität 29 ist der Aussenkonfiguration der Kapsel gemäss Figur 20 angepasst. Die Austrittsöffnung 9 ist nicht im Zentrum, sondern im unteren Bereich angeordnet. Die Penetrationselemente sind hier nicht in den Boden 16 der Kavität integriert. Vielmehr ist dort eine Ausnehmung vorgesehen, in welche die nachstehend beschriebene Bodensiebplatte eingepasst wird. Der Drainagekanal 15 verläuft als durchgehende Rinne bis zur Stützschulter 17. Unmittelbar neben dem Drainagekanal 12 und parallel zu diesem verlaufend ist eine Abtropfschürze 34 angeordnet. Wie aus Figur 22 ersichtlicht ist, verläuft diese Abtropfschürze über einen bestimmten Sektor auf der Aussenseite des Halters. Der Drainagekanal selbst wird als Rinne auf der Rückseite der Abtropfschürze fortgesetzt, so dass ausfliessende Flüssigkeit auch durch die Kapillarwirkung der Rinne aus dem Drainagekanal entfernt wird.

In Figur 23 ist perspektivisch eine Bodensiebplatte 35 dargestellt, die in den Boden der Halter gemäss Figur 21 eingesetzt werden kann. Im Zentrum ist eine Schraubenkegelfeder 36 fixiert, welche die Aufgabe hat, die Kapsel nach dem Öffnen der Kammer aus dem Halter 5 auszuwerfen. Rund um das Zentrum ist eine Mehrzahl von Penetrationselementen 19 angeordnet, über welche der Extrakt aus der Kapsel abgeführt werden kann. Die Siebplatte 35 kann beispielsweise aus Kunststoffmaterial oder auch aus einem keramischen Material hergestellt sein.

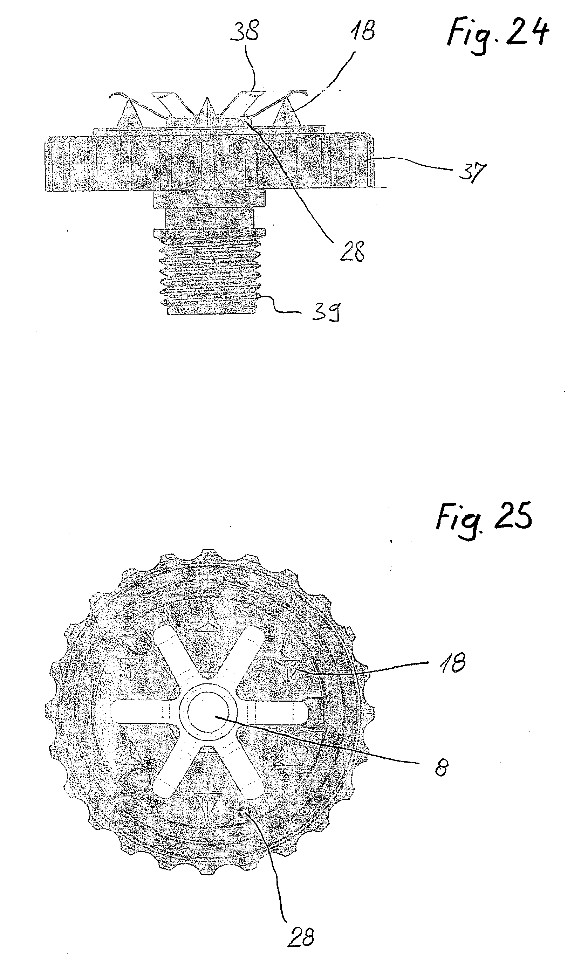

Schliesslich zeigen die Figuren 24 und 25 noch eine Injektorplatte 37, die beispielsweise in eine Kaffeemaschine gemäss Figur 3 (entsprechend Verschlussteil 6) eingesetzt werden kann). Die Injektorplatte verfügt zu diesem Zweck über ein Schraubgewinde 39. Durch das Zentrum führt eine durchgehende Eintrittsöffnung 8, über welche beispielsweise heisses Wasser in die Kapsel eingeführt werden kann. Auf der Oberseite der Injektorplatte und rund um die Eintrittsöffnung 8 ist eine Blattfederanordnung 38, bestehend aus insgesamt sechs einzelnen Blattfedern befestigt, welche sich radial nach aussen erstrecken. Zwischen den einzelnen Blattfedern ist im Umfangsbereich je ein Penetrationselement 18 in der Form einer Pyramide mit relativ scharfen Kanten angeordnet. Wie aus Figur 24 ersichtlich ist, ragen die freien Enden der Blattfedern im entspannten Zustand über die Pyramidenspitzen hinaus. Die Deckelfolie einer Kapsel wird somit bereits gespannt, bevor die Pyramidenspitzen eindringen. An einer einzigen Stelle ist auf der Oberseite ausserdem noch ein einzelnes Kompressionselement 28 in der Form eines Bolzens angeordnet. Im äussersten Umfangsbereich der Injektorplatte kann eine Dichtlippe aus elastischem Material angeordnet sein, welche sich im Schliesszustand gegen den umlaufenden Kragen der Kapsel presst.

## Patentansprüche

1. Vorrichtung (1) zum Zubereiten eines Getränks aus einer in einer Portionsverpackung, insbesondere in einer Kapsel (2) enthaltenen Substanz (3), mit einem flüssigen Medium, mit zwei in einer Schliessstellung gegeneinander pressbaren Kammerteilen (5, 6) zur Bildung einer Aufnahmekammer (7), in der die Portionsverpackung einschliessbar ist, wobei die Aufnahmekammer wenigstens eine Eintrittsöffnung (8) und wenigstens eine Austrittsöffnung (9) aufweist und das flüssige Medium in der Schliessstellung (S) durch die Portionsverpackung durchleitbar ist, wobei wenigstens eines der Kammerteile gegen die Aufnahmekammer gerichtete Kompressionsmittel (28) aufweist, mit denen in der Schliessstellung (S) die Portionsverpackung beaufschlagbar ist, **dadurch gekennzeichnet, dass** die Kompressionsmittel wenigstens ein Federelement (38) umfassen, das eine Mehrzahl von Blattfedern aufweist, die sich von einem Zentrum ausgehend radial nach aussen erstrecken und deren federnde freie Enden in der Schliessstellung die Portionsverpackung beaufschlagen, wobei zwischen einzelnen oder allen Blattfedern Penetrationselemente und/oder weitere Kompressionsmittel am Wandelement angeordnet sind.

2. Vorrichtung nach Anspruch 1, **dadurch gekennzeichnet, dass** wenigstens das Kammerteil mit den Kompressionsmitteln vorzugsweise im Umfangsbereich mehrere Penetrationselemente (18) aufweist.

3. Vorrichtung nach Anspruch 1 oder 2, **dadurch gekennzeichnet, dass** zwischen den einzelnen Blattfedern im Umfangsbereich je ein Penetrationselement in der Form einer Pyramide angeordnet ist.

4. Vorrichtung nach Anspruch 3, **dadurch gekennzeichnet, dass** die freien Enden der Blattfedern im entspannten Zustand über die Pyramidenspitzen hinausragen.

5. Vorrichtung nach einem der Ansprüche 1 bis 4, **dadurch gekennzeichnet, dass** das Kammerteil als Injektorplatte ausgebildet ist, durch deren Zentrum eine durchgehende Eintrittsöffnung (8) führt und dass die Blattfederanordnung rund um die Eintrittsöffnung befestigt ist.

6. Vorrichtung nach einem der Ansprüche 1 bis 5, **dadurch gekennzeichnet, dass** die Stirnseiten der Kompressionsmittel gerundet oder eckig ausgebildet sind.

7. Vorrichtung nach einem der Ansprüche 1 bis 6 mit einer Kapsel (2), bestehend aus einem vorzugsweise rotationssymmetrischen Kapselkörper (20) mit einer Seitenwand (21) und mit einem einstückig mit dieser ausgebildeten Boden (22), sowie mit einem den Kapselkörper abdeckenden Deckel (23) zur Bildung einer geschlossenen Kapselkammer (27), welche eine Substanz (3) für die Zubereitung eines Getränks enthält, wobei der Deckel und der Boden für die Durchleitung einer Flüssigkeit mit ausserhalb der Kapsel angeordneten Mitteln penetrierbar sind, wobei die Seitenwand (21) in einem dem Deckel (23) zugewandten Bereich im Querschnitt eine umlaufende Schulter (24) bildet, die wenigstens einen bezogen auf die Längsmittelachse (L2) der Kapsel im Querschnitt geneigten oder gekrümmten Wandabschnitt (25) aufweist, wobei die Aussenseite der Schulter eine umlaufende Dichtfläche (26) bildet, welche dichtend gegen eine komplementäre Auflagefläche pressbar ist.

8. Vorrichtung nach Anspruch 7, **dadurch gekennzeichnet, dass** der geneigte oder gekrümmte Wandabschnitt (25) der Kapsel eine Breite (b) von wenigstens 1 mm aufweist und dass die umlaufende Schulter (24) bezogen auf die Längsmittelachse (L2) eine Höhe von vorzugsweise wenigstens 3,5 mm aufweist.

9. Vorrichtung nach Anspruch 7 oder 8, **dadurch gekennzeichnet, dass** der geneigte Wandabschnitt (25) der Kapsel sich gegen den Boden verjüngend um 45° zur Längsmittelachse (L2) geneigt ist.

10. Vorrichtung nach einem der Ansprüche 7 bis 9, **dadurch gekennzeichnet, dass** die Seitenwand (21) der Kapsel zwischen Boden (22) und Schulter (24) sich gegen den Boden verjüngend ausgebildet ist, vorzugsweise um einen Winkel von 7° zur Längsmittelachse (L2) geneigt.

11. Vorrichtung nach einem der Ansprüche 7 bis 10, **dadurch gekennzeichnet, dass** die Kapsel aus einer Folie aus Kunststoffmaterial oder Biopolymer oder Metall tiefgezogen ist, wobei der Boden (22) vorzugsweise elastisch deformierbar ausgebildet ist und vorzugsweise eine Wandstärke von 0,1 mm bis 0,2 mm aufweist.

12. Vorrichtung nach einem der Ansprüche 7 bis 11, **dadurch gekennzeichnet, dass** an einem der Kammerteile Penetrationselemente und Kompressionsmittel angeordnet sind, wobei die Kompressionsmittel derart im Aussenbereich angeordnet sind, dass sie in der Schliessstellung den Deckel der Kapsel im Randbereich aufspannen.

13. Kaffeemaschine für Kaffeekapseln mit einer Vorrichtung nach einem der Ansprüche 1 bis 6.

14. Verwendung einer Vorrichtung nach einem der Ansprüche 1 bis 12, für die Zubereitung eines Getränks aus einer Kapsel.

## Claims

1. Apparatus (1) for preparing a beverage from a substance (3) contained in a portion pack, in particular in a capsule (2), using a liquid medium, having two chamber parts (5, 6) which can be pressed against one another in a closed position to form an accommodating chamber (7), in which the portion pack can be enclosed, wherein the accommodating chamber has at least one inlet opening (8) and at least one outlet opening (9) and, in the closed position (S), the liquid medium can be directed through the portion pack, wherein at least one of the chamber parts has compression means (28), which are directed towards the accommodating chamber, and, in the closed position (S), can act on the portion pack, **characterized in that** the compression means comprise at least one spring element (38), which has a plurality of leaf springs which extend radially outwards from a centre and of which the resilient free ends, in the closed position, act on the portion pack, wherein, between individual leaf springs or all the leaf springs, penetration elements and/or further compression means are arranged on the wall element.

2. Apparatus according to Claim 1, **characterized in that** at least the chamber part with the compression means has a plurality of penetration elements (18) preferably in the circumferential region.

3. Apparatus according to Claim 1 or 2, **characterized in that**, between the individual leaf springs, a respective penetration element in the form of a pyramid is arranged in the circumferential region.

4. Apparatus according to Claim 3, **characterized in that**, in the state in which they are relieved of stressing, the free ends of the leaf springs project beyond the pyramid tips.

5. Apparatus according to one of Claims 1 to 4, **characterized in that** the chamber part is designed in the form of an injector plate, which has an inlet opening (8) passing right through its centre, and **in that** the leaf-spring arrangement is fastened around the inlet opening.

6. Apparatus according to one of Claims 1 to 5, **characterized in that** the end sides of the compression means are of rounded or angular design.

7. Apparatus according to one of Claims 1 to 6 with a capsule (2) comprising a preferably rotationally symmetrical capsule body (20) with a side wall (21) and with a base (22), formed in one piece with said side wall, and with a cover (23), which covers the capsule body in order to form a closed capsule chamber (27), which contains a substance (3) for preparing a beverage, wherein the cover and the base, in order for a liquid to be channelled through, can be penetrated by means arranged outside the capsule, wherein the side wall (21), in a region which is directed towards the cover (23), forms, as seen in cross section, an encircling shoulder (24), which has at least one wall portion (25) which is inclined or curved in cross section in relation to the longitudinal centre axis (L2) of the capsule, wherein the outside of the shoulder forms an encircling sealing surface (26), which can be pressed with sealing action against a complementary bearing surface.

8. Apparatus according to Claim 7, **characterized in that** the inclined or curved wall portion (25) of the capsule has a width (b) of at least 1 mm, and **in that** the encircling shoulder (24), in relation to the longitudinal centre axis (L2), has a height of preferably at least 3.5 mm.

9. Apparatus according to Claim 7 or 8, **characterized in that** the inclined wall portion (25) of the capsule is inclined, with tapering in relation to the base, by 45° in relation to the longitudinal centre axis (L2).

10. Apparatus according to one of Claims 7 to 9, **characterized in that** the side wall (21) of the capsule, between the base (22) and shoulder (24), is designed with tapering in relation to the base, and is inclined preferably by an angle of 7° in relation to the longitudinal centre axis (L2).

11. Apparatus according to one of Claims 7 to 10, **characterized in that** the capsule is thermoformed or deep-drawn from a sheet of plastics material or biopolymer or metal, wherein the base (22) is preferably of elastically deformable design and preferably has a wall thickness of 0.1 mm to 0.2 mm.

12. Apparatus according to one of Claims 7 to 11, **characterized in that** penetration elements and compression means are arranged on one of the chamber parts, wherein the compression means are arranged in the outer region such that, in the closed position, they tension the cover of the capsule in the peripheral region.

13. Coffee machine for a coffee capsules with an apparatus according to one of Claims 1 to 6.

14. Use of an apparatus according to one of Claims 1 to 12 for preparing a beverage from a capsule.

## Revendications

1. Dispositif (1) de préparation d'une boisson à partir d'une substance (3) contenue dans un emballage en dose, en particulier dans une capsule (2), avec un milieu fluide, avec deux parties de chambre (5, 6) pouvant être pressées l'une contre l'autre dans une position de fermeture pour former une chambre de réception (7) dans laquelle l'emballage en dose peut être inclus, la chambre de réception présentant au moins une ouverture d'entrée (8) et au moins une ouverture de sortie (9) et le milieu fluide pouvant être conduit dans la position de fermeture (S) à travers l'emballage en dose, au moins l'une des parties de chambre présentant des moyens de compression (28) orientés vers la chambre de réception, avec lesquels, dans la position de fermeture (S), l'emballage en dose peut être sollicité, **caractérisé en ce que** les moyens de compression comprennent au moins un élément de ressort (38) qui présente une pluralité de ressorts à lames qui s'étendent radialement vers l'extérieur depuis un centre et dont les extrémités libres élastiques sollicitent l'emballage en dose dans la position de fermeture, des éléments de pénétration et/ou d'autres moyens de compression étant disposés au niveau de l'élément de paroi entre des ressorts à lames individuels ou entre tous les ressorts à lames.

2. Dispositif selon la revendication 1, **caractérisé en ce qu'**au moins la partie de chambre avec les moyens de compression présente de préférence dans la région de la périphérie plusieurs éléments de pénétration (18).

3. Dispositif selon la revendication 1 ou 2, **caractérisé en ce qu'**entre les ressorts à lames individuels, dans la région périphérique, est à chaque fois disposé un élément de pénétration en forme de pyramide.

4. Dispositif selon la revendication 3, **caractérisé en ce que** les extrémités libres des ressorts à lames, dans l'état détendu, font saillie au-delà des pointes de la pyramide.

5. Dispositif selon l'une quelconque des revendications 1 à 4, **caractérisé en ce que** la partie de chambre est réalisée sous forme de plaque d'injecteur à travers le centre de laquelle passe une ouverture d'entrée traversante (8) et **en ce que** l'agencement de ressorts à lames est fixé tout autour de l'ouverture d'entrée.

6. Dispositif selon l'une quelconque des revendications 1 à 5, **caractérisé en ce que** les côtés frontaux des moyens de compression sont réalisés sous forme arrondie ou polygonale.

7. Dispositif selon l'une quelconque des revendications 1 à 6, comprenant une capsule (2), constituée d'un corps de capsule (20) de préférence à symétrie de révolution avec une paroi latérale (21) et avec un fond (22) réalisé d'une seule pièce avec celle-ci, ainsi qu'avec un couvercle (23) recouvrant le corps de capsule pour former une chambre de capsule fermée (27), laquelle contient une substance (3) pour la préparation d'une boisson, le couvercle et le fond pouvant être traversés pour le passage d'un liquide par des moyens disposés à l'extérieur de la capsule, la paroi latérale (21) formant, dans une région tournée vers le couvercle (23), en section transversale, un épaulement périphérique (24) qui présente au moins une portion de paroi inclinée ou courbe (25) en section transversale par rapport à l'axe médian longitudinal (L2) de la capsule, le côté extérieur de l'épaulement formant une surface d'étanchéité périphérique (26), qui peut être pressée de manière hermétique contre une surface d'appui complémentaire.

8. Dispositif selon la revendication 7, **caractérisé en ce que** la portion de paroi inclinée ou courbe (25) de la capsule présente une largeur (b) d'au moins 1 mm et **en ce que** l'épaulement périphérique (24) présente, par rapport à l'axe médian longitudinal (L2), une hauteur de préférence d'au moins 3,5 mm.

9. Dispositif selon la revendication 7 ou 8, **caractérisé en ce que** la portion de paroi inclinée (25) de la capsule est inclinée de 45° par rapport à l'axe médian longitudinal (L2) en se rétrécissant vers le fond.

10. Dispositif selon l'une quelconque des revendications 7 à 9, **caractérisé en ce que** la paroi latérale (21) de la capsule entre le fond (22) et l'épaulement (24) est réalisée en se rétrécissant vers le fond, de préférence est inclinée suivant un angle de 7° par rapport à l'axe médian longitudinal (L2).

11. Dispositif selon l'une quelconque des revendications 7 à 10, **caractérisé en ce que** la capsule est emboutie à partir d'une feuille de matière plastique ou de biopolymère ou de métal, le fond (22) étant réalisé sous forme déformable de préférence élastiquement et présentant de préférence une épaisseur de paroi de 0,1 mm à 0,2 mm.

12. Dispositif selon l'une quelconque des revendications 7 à 11, **caractérisé en ce que** des éléments de pénétration et des moyens de compression sont disposés au niveau de l'une des parties de chambre, les moyens de compression étant disposés dans la région extérieure de telle sorte qu'ils s'étendent dans la position de fermeture au-dessus du couvercle de la capsule dans la région du bord.

13. Machine à café pour des capsules de café comprenant un dispositif selon l'une quelconque des revendications 1 à 6.

14. Utilisation d'un dispositif selon l'une quelconque des revendications 1 à 12, pour la préparation d'une boisson à partir d'une capsule.
